# EUROPÄISCHE PATENTANMELDUNG

(11) **EP 1 811 334 A1**
(43) Veröffentlichungstag der Anmeldung: **25.07.2007**
(21) Anmeldenummer: 07000157.3
(22) Anmeldetag: 05.01.2007
(51) Int. Cl.: G03B 37/04

(54) **Panorama-Sicht-System insbesondere in Kampffahrzeugen**

(30) Priorität: 24.01.2006 DE 102006003524
(71) Anmelder: OERLIKON CONTRAVES AG, 8050 Zürich (CH)
(72) Erfinder: Mäder, Urban, 8004 Zürich (CH); Gerber, Michael, 8050 Zürich (CH); Widmer, Roman, 8055 Zürich (CH)
(74) Vertreter: Dietrich, Barbara

(57) **Zusammenfassung**

Es wird vorgeschlagen, die durch die einzelnen Kameras (2ₙ) akquirierten digitalen Daten und in digitalisierte Bilder (21ₙ) umgesetzten Bilder zwar auf virtuelle 3D-Leinwände (31 ₙ) zu projizieren, die mittels Rechner (5) erzeugbar sind und was virtuell mittels einer 3D-beschleunigten Hardware realisiert werden kann, jedoch als Ergebnis nicht in 3D darzustellen. Das virtuelle 3D- Szenarium (Leinwände (31ₙ) mit den aktuellen Kamerabildern(21)), wird somit auf 2D projiziert und den Benutzern (7ₙ) dargestellt. Dieses Verfahren ermöglicht die Nutzung einfacher Kameras (2ₙ) mit einfachen Objektiven. Es kann auf Kameras mit Zoomtechnik verzichtet werden.

## Beschreibung

Die Erfindung betrifft ein Panorama -Sichtsystem insbesondere in einem Kampffahrzeug.

Ein Rundumsichtsystem beschreibt beispielsweise die DE 102 17 177 A1. Das glasoptische Direktsichtsystem ist dabei als Rundblick-Sichtgerät ausgebildet.

In Jane's "International Defense Review", vom 01. August 2004, wird ein Panorama-Sicht-System der Anmelderin näher beschrieben. Dieses auf einer Ausstellung in Paris vorgestellte System umfasst acht kommerzielle Kameras mit 1 Megapixel Ausgängen. Die Kameras selbst können in den von ihnen überstrichenen Bereich zoomen. Mit Hilfe einer Computermaus kann der Bediener auch Bilder hinter sich ansehen, ohne den Kopf in diese Richtung wenden zu müssen. In diesem Fall wird z.B. über digital eingeblendete Signaturen dem Bediener mitgeteilt in welche Richtung er aktuell schaut. Durch eine digitale Korrektur wird, wie kurz angesprochen, ein besserer Übergang geschaffen, wenn der Bediener von einer Kamera in die andere schaut. Weitere Ausführungen zum Panorama-Sicht-System werden nicht gemacht.

Die Firma United Defense propagiert mit dem Enhanced Situational Awareness System - Eagle Vision^{™*}- gleichfalls ein Panorama-Sicht-System, welches den horizontalen Bereich über 360° abdeckt. Hier befindet sich im Helm eines Bedieners ein Display.

Auf der Internetseite www.octec.com/image processing products/functionality/mosaic.html wird ein Verfahren vorgestellt, mit dem es möglich ist, digitale Einzelbilder eines Einzelsensors so miteinander zu verbinden, dass ein Gesamtbild in Form einer Panoramaanzeige geschaffen wird, Überlappungen jedoch dabei nicht sichtbar werden.

Ein Rundumsicht-Überwachungssystem mit bewegungsloser Kamera wird in der DE 694 29 028 T2 (EP 0 610863 B1) beschrieben, wobei auf die Vorrichtung als auch den Algorithmus zum Transformieren einzelner perspektivisch verzerrter Blick- oder Sichtfelder in mehrere nicht verzerrte normale perspektivische Bilder eingegangen wird. Die Vorrichtung umfasst Mittel zum Steuern des omni-direktionalen Betrachtens sowie zum Digitalisieren eines eingehenden oder voraufgezeichneten Videosignals etc.

Die Erfindung stellt sich die Aufgabe, aufbauend auf bekannten Sicht-Systemen ein Verfahren aufzuzeigen, mit dem ein von mehreren Kameras gelieferten Einzelbildern erzeugtes Panoramabild dem Bediener zur Verfügung gestellt wird.

Gelöst wird die Aufgabe durch die Merkmale des Patentanspruchs 1. Vorteilhafte Ausführungen sind in den Unteransprüchen aufgeführt.

Der Erfindung liegt die Idee zugrunde, mit Hilfe von einfachen 2D- Kameras eine quasi 3D-Rundumsicht dem Bediener zur Verfügung zu stellen, wobei der Bediener in den Ausschnitt der Rundumsicht hineinzoomen kann, in den er augenblicklich schaut. Des Weiteren werden Überlappungen der Bilder vermieden.

Zur Umsetzung dieser Idee wird vorgeschlagen, die durch die einzelnen Kameras akquirierten digitalen Daten und in digitalisierte Bilder umgesetzten Bilder zwar auf virtuellen 3D-Leinwänden zu projizieren, was virtuell mittels einer 3D-beschleunigten Hardware realisiert werden kann, jedoch als Ergebnis nicht in 3D dargestellt wird. Um keine spezielle Hardware dafür entwickeln zu müssen, wird erfindungsgemäß die Verwendung der 3D Technologie von Grafikkarten vorgeschlagen. Das virtuelle 3D-Szenarium (Leinwände mit den aktuellen Kamerabildern) wird somit auf 2D projiziert und dem Benutzer dargestellt. Dieses Verfahren ermöglicht die Nutzung einfacher Kameras mit einfachen Objektiven. Es kann auf Kameras mit Zoomtechnik verzichtet werden.

Die von den Objektiven gelieferten Bilder werden vorab durch einen Rechenalgorithmus durch Kompensation entzerrt. Dadurch wird eine gute Übereinstimmung der sich überschneidenden und damit zu verschmelzenden Bilder erreicht.

Zur Vermeidung der Darstellung von Überschneidungen der einzelnen Bilder und damit zur optimalen Panoramadarstellung (gleichmäßiges Bild) wird die Ausrichtung der virtuell aufgezogenen Leinwände (=Kameras) eingelesen, das so genannte Alignment. Durch jeden Pixel jeder Leinwand wird ein Lichtstrahl geschickt und geprüft, ob dieser Strahl noch durch eine andere Leinwand geht. Wird dies verneint, wird die Intensität dieses Pixels auf 100% gesetzt. Wird die Frage jedoch bejaht, wird die Intensität des Pixels auf den beiden Leinwänden so angepasst, dass dieser in Summe auf beiden Leinwänden eine Intensität von 100 % besitzt. Das ergibt einen gleichmäßigen Übergang. Es erfolgt also immer eine Intensitätsanpassung auf 100% bei Überschneidungen der Leinwände. Das Ergebnis wird dann in einer Tabelle abgespeichert.

Das Panorama-Sicht-System sollte vorzugsweise aus acht, den horizontalen Bereich über 360° abdeckenden, Kameras bestehen. Eine Rechnereinheit fügt die Bilder dieser Kameras in Echtzeit zu einem nahtlosen Panorama zusammen. Die Bediener wählen individuell beliebige Abschnitte aus. Ein bzw. das Display ist bevorzugt am Helm des Bedieners befestigt. Zusammen mit einem Bewegungssensor, der die Position des Helmes erfasst, bildet dieses eine Mensch-Maschinen-Schnittstelle.

In Weiterführung der Erfindung ist vorgesehen, dass gleichzeitig mehrere unterschiedliche Bildausschnitte für mehrere Benutzer angeboten werden können.

Die Feinausrichtung der Kameras untereinander wird gleichfalls mittels Software vorgenommen. Das Alignmentverfahren wird mit Hilfe eines Korrelationsverfahrens automatisiert.

Durch ein externes Referenzsystem (Lagemessung), kann dem Operator zudem ein stabilisiertes Bild zur Verfügung gestellt werden. Die Stabilisierung selbst wird im Rechner vorgenommen, es wird keine Stabilisierung der Kameras benötigt. Die Referenzachse (in der Regel Fahrzeuglängsachse) ist per Knopfdruck justierbar.

Mittels verschiedener Alignments (=Ausrichtung der Kamera) kann die Übereinstimmung (und Helligkeit) gesteuert werden, so dass Übereinstimmungen im Nah-, Mittel- oder Fernbereich optimal sind.

Für die Anzeige im Nah-, Mittel- oder Fernbereich ist in Weiterführung der Erfindung ein digitales Zoomen in das Bild auf dem Monitor, nicht der Kameraobjektive vorgesehen. Jeder Operator kann unabhängig von den anderen einen eigenen Bildausschnitt wählen und beliebig zoomen. Für das Zoomen fährt der Bediener mit seiner Computermaus, Joystick, Tastatur oder dergleichen in das Bild und vergrößert dieses bereits beim Hineinzoomen. Selbige Bedienelemente dienen auch zur allgemeinen Steuerung des Systems.

Die Vorteile dieser Erfindung liegen somit darin, dass mehrere Kamerabilder, deren Sichtbereiche sich beliebig überlappen, verschmolzen werden können. Des Weiteren kann das System von mehreren Operatoren, welche in verschiedene Richtungen schauen wollen, gleichzeitig benutzt werden. Die Ausrichtung der fix montierten Kameras untereinander wird durch ein Korrelationsverfahren automatisch vermessen. Zudem braucht für verschiedene Sichtbereiche nur ein Alignment ausgewählt werden. Ein weiterer Vorteil liegt in der Nutzung unterschiedlicher Kameras und Objektive bei gleichem Dataprocessing. Die Konfiguration und Anzahl der Kameras ist schnell bewältigbar und kann schnell geändert und / oder angepasst werden. Der Ausfall einer Kamera oder eines Frame Grabbers führt nicht zum Totalausfall des Systems, es fällt nur ein Sektor aus.

Das System ist nicht limitiert auf Rundumsichten. Durch entsprechende Anordnungen der Kameras können jede erdenklichen Bereiche abgedeckt und die Bilder verschmolzen werden.

Es wird somit ein System angeboten, welches sich durch ein nahtloses 360° Panorama in Echtzeit auszeichnet, bei dem beliebige Bildausschnitte (Winkel, Zoomposition) individuell realisierbar sind und gleichzeitig mehrere unterschiedliche Bildausschnitte für mehrere Benutzer vorhanden sind. Die Bildausschnitte oder das ganze Panorama ist über standardisierte Links an übergeordnete und / oder angrenzende Führungssysteme übertragbar. Auch eine Einblendung vitaler Zusatzinformationen wie Meldungen eines Battle Management Systems, Warnungen, Zielinformationen kann vorgesehen werden.

Es können farbige und / oder schwarz-weiße Kamerabilder von mehreren Kameras, die fix montierbar sind, verarbeitet werden. In der Regel handelt es sich dabei um digitale Bilder.

Genutzt werden kann diese Rundumsicht (360°) oder Teilsicht (kleiner 360°) nicht nur zum Fahren, vorwärts als auch rückwärts, sondern neben Anwendungen auf Schiffen und Flugzeugen bzw. Helikoptern auch bei Überwachungen wie Eingangsbereichsüberwachung, Ladenüberwachung, bei Geldtransportern usw.

Anhand eines Ausführungsbeispiels mit Zeichnung soll die Erfindung näher erläutert werden Es zeigt:
- Fig. 1: eine allgemeine Blockdarstellung des Systems,
- Fig. 2: eine mögliche Anordnung der Kameras auf einem Träger,
- Fig. 3: eine auszugsweise Panorama-Sicht-Darstellung.

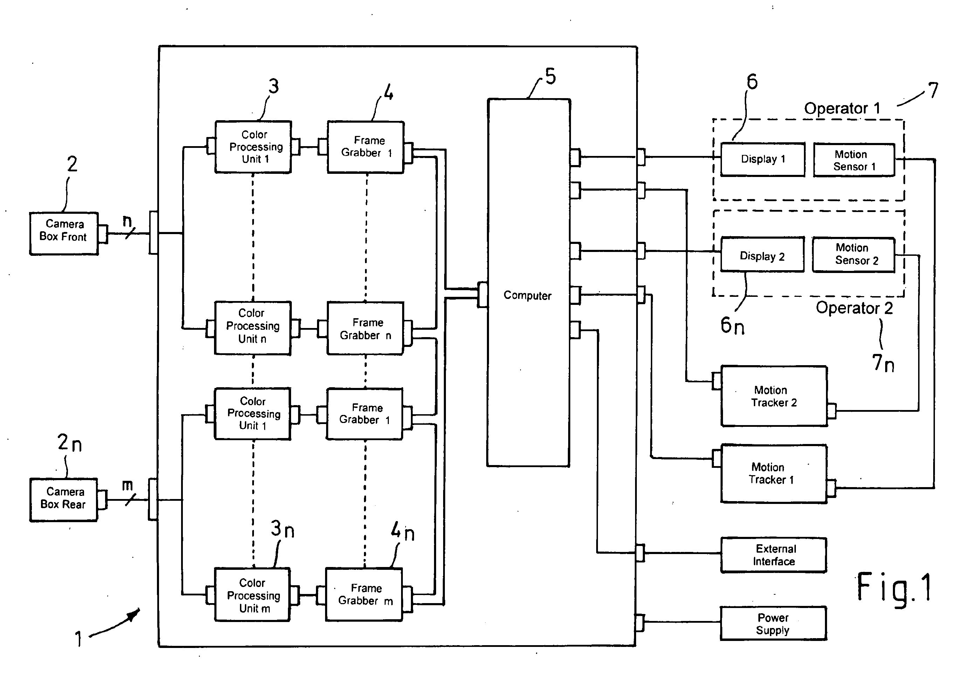

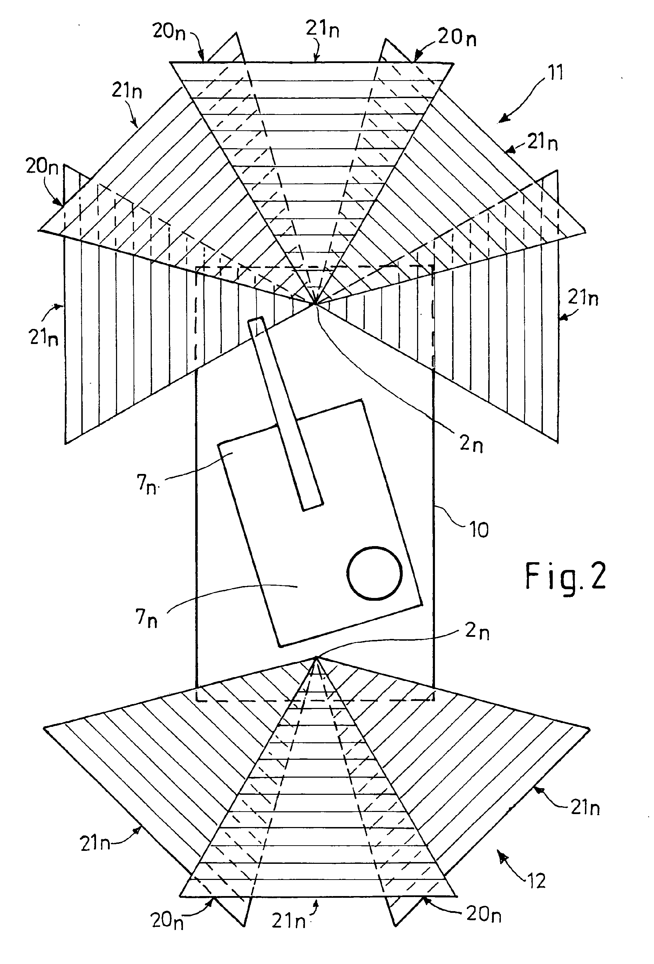

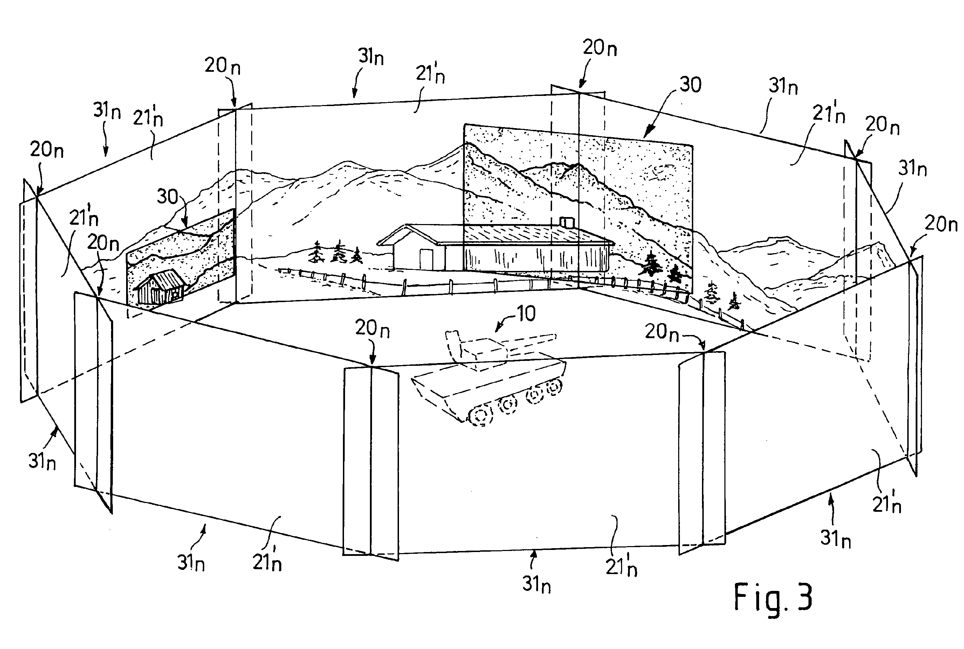

Fig. 1 zeigt in einer Blockbilddarstellung eine mögliche Ausführung des Systems 1, mit mehreren im vorderen Bereich 11 als auch im hinteren Bereich 12 eines Trägers 10, wie Fahrzeug oder anderen Objekten (Fig.2) angebrachten Kameras 2ₙ. Mit den Kameras 2ₙ verbunden sind Bilderzeugungsschaltungen 3ₙ die auf zugehörige Frame Grabber 4ₙ (nehmen Bilder von den Kameras 2ₙ und stellen diese via Bus einem Rechner oder Computer 5 auf verlangen zur Verfügung) geschaltet sind. Die Ausgänge dieser Grabber 4ₙ sind auf den Rechner 5 geführt, der seinerseits weitere Eingänge und mehrere Ausgänge besitzt, welche beispielsweise auf die einzelnen Displays 6ₙ der einzelnen, nicht näher dargestellten Bediener 7ₙ aufgeschaltet sind. Der Rechner 5 inklusive Grafikkarte hat die Aufgabe, das quasi 3D-Panoramabild 30 (Fig. 3) zu realisieren.

Fig. 2 zeigt die sich überlappenden Bereiche 20ₙ zwischen den von den Kameras 2ₙ aufgenommenen Bildern 21ₙ. Diese widerspiegeln sich in der Panoramadarstellung 30 nach Fig. 3.

Das Verfahren zur Sichtdarstellung des Panoramabildes 30 (hier in Rundumsicht, was aber nicht Bedingung ist) läuft wir folgt ab:

Es werden sämtliche Kamerabilder 21ₙ von den jeweiligen Frame Grabbern 4ₙ eingelesen. Der Rechner 5 stell fest, in welche Richtung (Kamera 2ₙ) der Benutzer 7 schauen will und rechnet aus, welche Daten bzw. welcher Ausschnitt von welchen der Kameras 2ₙ benötigt werden für die Darstellung. Dabei wird davon ausgegangen, dass dem Rechner 5 die Anordnung der Kameras 2ₙ bekannt ist und der Rechner 5 über ein HMI die Information über die Blickrichtung des Benutzers erhält. Mit diesen Informationen werden nun die Bilddaten für den Benutzer berechnet. Der Rechner 5 holt sich dazu die Daten via Bus von den entsprechenden Grabbern 4ₙ. Diese Bilder 21ₙ werden durch eine herkömmliche Software entzerrt, wenn diese durch Nutzung einfacher Objektive verzerrt wurden.

In einem Zwischenschritt ist, um saubere Übergänge zu schaffen, vorgesehen, dass die Intensität der Bilder 21ₙ in den Überschneidungsstellen 20ₙ angepasst werden (an einen so genannten Alpha-Wert, wird noch ausgeführt), wobei dafür gespeicherte Werte aus einer relevanten Tabelle herangezogen werden. Die so geschaffenen Bilder 21ₙ werden zwar auf 3D- Leinwänden 31ₙ (läuft virtuell auf 3D beschleunigter Hardware im Rechner 5) projiziert, das Ergebnis hingegen aber nicht in 3D dargestellt. Die 3D- Szenerie (Leinwände 31ₙ mit den aktuellen Kamerabildern 21ₙ) wird auf 2D projiziert und dem Benutzer dargestellt. In diese Szenerie kann der Benutzer, wenn er möchte, hineinzoomen. Dies erfolgt wie herkömmlich bekannt.

Stellt das HMI (Human-Maschine-Interface) fest, dass der gleiche Benutzer 7 in eine andere Richtung schaut, läuft das vor beschriebene Verfahren adäquat ab.

Zum Ausblenden bzw. Korrigieren dieser Ansichten erfolgt in Weiterführung des vor beschriebenen Verfahrens ein zusätzliches Korrekturverfahren, mit welchem die Alphawerte ermittelt und im Rechner 5 abgespeichert werden können.

Das Verfahren zur Korrektur als auch zur Sichtdarstellung läuft dabei in etwa wie folgt ab:

Vor dem Systemstart wird bevorzugt ein so genanntes Alphafile generiert. Im ersten Schritt wird dazu die Ausrichtung der Leinwände 31ₙ (=Kameras 2ₙ) eingelesen (Alignment). Durch jeden Pixel jeder Leinwand 31ₙ wird ein Lichtstrahl geschickt und geprüft, ob dieser Strahl noch durch eine andere Leinwand 31ₙ geht. Wird dies verneint, wird die Intensität auf 100% gesetzt. Wird diese Frage jedoch bejaht, wird die Intensität der beiden Leinwände 31ₙ so angepasst, dass die Summe der beiden Intensitäten der Leinwände 31ₙ 100% ist und sich ein gleichmäßiger Übergang ergibt. Bei den Überschneidungen 20ₙ von zwei oder mehreren Leinwänden 31ₙ werden diese ermittelten und angepassten Intensitäten in einer Tabelle in einem Speicher des Rechners 5 abgespeichert bzw. hinterlegt. Während der Laufzeit können verschiedene Alphafiles geladen werden, um eine optimale Überschneidung (20ₙ) im Nah-, Mittel- oder Fernbereich zu erzielen

Wie bereits erwähnt, zeichnet sich das System 1 dadurch aus, dass eine individuelle Darstellung für mehrere Benutzer 7ₙ gleichzeitig stattfinden kann.

Die Darstellung für den Benutzer 7 erfolgt bevorzugt in einem Display (nicht näher dargestellt), welches in bekannter Art und Weise an einem Helm befestigt sein kann. Zusammen mit einem Bewegungssensor, der die Position des Helmes erfasst, entsteht eine benutzerfreundliche MMI Schnittstelle. Der Bediener 7ₙ blickt scheinbar durch die Wände des Objektes 10. Die Basis für eine Zielzuweisung im Nahbereich in einem Kampffahrzeug oder dergleichen als Objekt 10 bildet die Blickrichtung eines Kommandanten.

## Patentansprüche

1. Panorama- Sichtsystem (1), aufweisend
- mehreren Kameras (2ₙ), die an einem Objekt (10) oder dergleichen verteilt angeordnet sind und Szenarien um das Objekt (10) aufnehmen, und die mit wenigstens einem Rechner (5) verbunden sind, in dem sämtliche Kamerabilder (21ₙ) der Kameras (2ₙ) einlaufen, die wenigstens einem Bediener (7ₙ) nach Aufarbeitung im Rechner (5) zur Betrachtung angeboten werden,
- die Kameras (2ₙ) mit Bilderzeugungsschaltungen (3ₙ) verbunden sind, die auf zugehörige Frame Grabber (4ₙ) geschaltet werden, wobei die Ausgänge der Grabber (4ₙ) auf den Rechner (5) geführt sind, der seinerseits mehrere Ausgänge besitzt, die ihrerseits mit wenigstens einem Display (6ₙ) wenigstens eines Bedieners (7ₙ) des Panorama- Sichtsystems (1) verbunden sind, wobei
- die Bilder (21ₙ) auf virtuelle 3D Leinwände (31ₙ) projiziert werden, die wenigstens einem Bediener (7ₙ) als ein quasi 3D- Panoramabild (30) in 2D zur Verfügung stehen.

2. Panorama- Sichtsystem nach Anspruch 1, **dadurch gekennzeichnet, dass** mehreren Kameras (2ₙ) im vorderen Bereich (11) als auch im hinteren Bereich (12) des Objektes (10) angebracht sind.

3. Panorama- Sichtsystem nach Anspruch 1 oder 2, **dadurch gekennzeichnet, dass** mehrere Bediener (7ₙ) auf das System (1) zugreifen können und von anderen Bedienern (7ₙ) unterschiedliche quasi 3D- Panoramabilder (30) angeboten bekommen.

4. Panorama- Sichtsystem (1) nach einem der Ansprüche 1 bis 3, **dadurch gekennzeichnet, dass** das Display bevorzugt am Helm des Bedieners (7ₙ) befestigt ist und mit einem Bewegungssensor in funktionaler Verbindung steht, der die Position des Helmes und damit die Blickrichtung des Bedieners (7ₙ) erfasst.

5. Panorama- Sichtsystem (1) nach einem der Ansprüche 1 bis 4, **dadurch gekennzeichnet, dass** das Objekt (10) ein Land-, Wasser- oder Luftfahrzeug, ein Gebäude oder dergleichen ist.

6. Verfahren zur Darstellung von um ein Objekt (10) stattfindende Szenarien, die mit Hilfe von am Objekt (10) angebrachten Kameras (2ₙ) aufgenommen, in einem Rechner (5) verarbeitet und einem Bediener (7ₙ) in Form eines Panoramabildes (30) angeboten werden, **dadurch gekennzeichnet, dass**
- sämtliche Kamerabilder (21ₙ) der Kameras (2ₙ) vom jeweiligen Frame Grabbern (4ₙ) eingelesen und dem Rechner (5) zur Verfügung gestellt werden, wobei
- der Rechner (5) feststellt, in welche Richtung der entsprechende Bediener (7ₙ) schauen will und ausrechnet, welche Daten bzw. welcher Ausschnitt von welchen der Kameras (2ₙ) für die Darstellung benötigt werden,
- der Rechner (5) sich danach die Daten von den entsprechenden Grabbern (4ₙ) zuspielen lässt und diese Bilder (21ₙ) auf virtuellen 3D Leinwänden (31ₙ) im Rechner (5) auf 2D projiziert und dem entsprechenden Bediener (7ₙ) darstellt.

7. Verfahren nach Anspruch 6, **dadurch gekennzeichnet, dass** vor dem Systemstart ein so genanntes Alphafile generiert wird, wozu in einem ersten Schritt die Ausrichtung visueller Leinwände (31ₙ) im Rechner (5) eingelesen wird, durch jeden Pixel jeder Leinwand (31ₙ) ein imaginärer Lichtstrahl geschickt und geprüft wird, ob dieser Strahl noch durch eine andere Leinwand (31ₙ) geht, wobei, wenn dies nicht der Fall ist, die Intensität auf 100% gesetzt wird, wenn dies der Fall ist, die Intensität der jeweiligen Leinwände (31ₙ) so angepasst wird, dass die Summe der Intensitäten der betroffenen Leinwände (31ₙ) 100% beträgt und diese ermittelten und angepassten Intensitäten in einer Tabelle in einem Speicher des Rechners (5) abgespeichert bzw. hinterlegt werden.

8. Verfahren nach Anspruch 6 oder 7, **dadurch gekennzeichnet, dass** in die abgebildeten Szenerien der jeweilige Bediener(7ₙ) individuell hineinzoomen kann.

9. Verfahren Anspruch 7, **dadurch gekennzeichnet, dass** während der Laufzeit verschiedene Alphafiles geladen werden können, um eine optimale Überschneidung (20ₙ) im Nah-, Mittel- oder Fernbereich zu erzielen.
